# EUROPEAN PATENT SPECIFICATION

(11) **EP 2 719 562 B1**
(45) Date of publication and mention of the grant of the patent: **02.09.2015**
(21) Application number: 13187693.0
(22) Date of filing: 08.10.2013
(51) Int. Cl.: B60J 1/14, B60J 5/04, E05D 1/04, E05D 1/06

(54) **Residential vehicle and cover panel**
Wohnwagen und Abdeckpaneel
Caravane et panneau de recouvrement

(30) Priority: 09.10.2012 NL 2009600
(43) Date of publication of application: 16.04.2014
(73) Proprietor: Polyplastic Groep B.V., 3044 CK Rotterdam (NL)
(72) Inventor: Van den Hooven, Robin, 2806 TD Gouda (NL); Veeneman, Jan Peter, 3044 CK Rotterdam (NL)
(74) Representative: van Loon, Alexander

(56) References cited:
- EP-A1- 0 382 288
- EP-A1- 0 602 755
- DE-A1- 2 544 220
- DE-U1- 20 212 513
- DE-U1-202005 006 861

## Description

The present invention relates to a residential vehicle such as a caravan, camper or boat, comprising a wall with at least a wall opening and a cover panel to seal the wall opening, the cover panel comprising a double-walled panel with an at least almost flat front wall on a visible side and a back wall on a side facing the wall opening, the front wall and back wall bordering a cavity space, wherein the cover panel is fastened to the wall by means of a pivot body with which the cover panel is adjustable between a closed position sealing the wall opening and an open position releasing the wall opening, wherein the pivot body comprises an open space to receive an edge part of the cover panel, and wherein the pivot body comprises a first body part fastened to the wall and a second body part fastened to the first body part in a pivoting manner and detachable from the first body part.

The invention in particular relates to the cover panel with pivot body used therein. As in known residential vehicles, the cover panel, for example a window or a door, is used to seal the wall opening. In order to be able to release the wall opening at will, for example to air a room within the residential vehicle, or alternatively to partially or completely seal it in order to, for example, prevent an unwanted entry into the room, the cover panel is often fastened to the wall with a pivot body. Due to the pivot body the cover panel is easily adjustable between a closed position sealing the wall opening and an open position releasing the wall opening.

In known residential vehicles the pivot body is fastened against the wall of the vehicle and comprises an open space in the form of a longitudinal receiving cavity in which an edge part of the cover panel is disposed. In this case the edge part is often slid into the receiving cavity from an open side of the pivot body. A shape of the edge part, for example an angulated end, thus prevents the edge part from moving out of the pivot body in a sideways manner. Although a fastening of the cover panel against the wall of the residential vehicle is thus realizable, the systems used are far from optimal. In particular, the fastening of the cover panel with the pivot body used in the known systems results is a relatively thick whole wherein the window and the pivot body protrude relatively far from the wall of the residential vehicle. Not only does this stand out prominently, reducing the esthetic value of the cover panel and the residential vehicle, but it also results in greater air resistance during possible transportation or moving of the residential vehicle. Thus the cover panel runs an increased risk of undesirably flying open or in the least fortunate case completely breaking off the wall of the residential vehicle through the influence of strong air currents on it.

The present invention therefore among other things aims to address this objection and in particular to provide a whole lying especially flat against the wall.

In order to address the intended goal a residential vehicle of the type described in the opening paragraph according to the invention is characterized in that the second body part comprises a clamping profile bordering the space on either side to receive an edge part of the back wall clampingly in the space in the clamping profile and the front wall extends beyond at least the clamping profile of the pivot body with an edge part. Due to the clamping profile the edge part can be carried out in a flat manner while nevertheless being reliably held by the pivot body. The pivot body itself can thus also be carried out in a flat manner. Moreover, the pivot body can be arranged over the edge part of the cover panel in one go with the clamping profile, so that the cover panel no longer needs to be slid with the edge part through the longitudinal receiving cavity over the total length of the pivot body. Due to the fact that the first pivot body and the second pivot body are mutually detachable, the second body part can practically easily be fitted to the edge part separately from the first body part.

A residential vehicle having a double-walled cover panel fastened to a wall of the vehicle by means of a pivot body which comprises a first body part fastened to the wall and a second body part fastened to the first body part in a pivoting manner is known from German patent application DE 2 544 220. In this document the second body part has a space for clampingly receiving an edge part of the double-walled cover panel in the space.
The double-walled cover panel provided with a cavity space offers a great advantage in relation to an insulating value thereof, but constitutes a fairly thick construction. To prevent such a construction from protruding far out from the wall of the vehicle according to the present invention, a back wall with an offset edge part is used the at least substantially flat front wall being fastened against the offset edge part whilst enclosing the cavity space. The back wall is in this case mainly placed in the opening in the wall of the residential vehicle so that at least almost only the flat front wall of the wall protrudes. Thus a part of the cover panel protruding with respect to an outer side of the wall remains limited in thickness, which results in a flat and aesthetically attractive view.

Since the cover panel of the vehicle according to the present invention sticks into the clamping profile with an edge part of the back wall and the front wall extends beyond at least the clamping profile of the pivot body with an edge part, the clamping profile usually perceived as aesthetically less appealing is hidden from view by the edge part of the front wall of the cover panel extending beyond it. At least the edge part of the front wall of the cover panel extending beyond it can be realized in for example a relatively opaque manner in a favoured colour scheme or provided with a print to further increase its aesthetic value.

In a first preferred embodiment the residential vehicle according to the present invention is characterized in that the clamping profile, on either side of the edge part of the cover panel, engages clampingly with two clamping cheeks facing each other provided with a roughness at least near a free end on a side facing the space. The roughness provides for a better grip on the edge part of the cover panel by the clamping profile. This counters a further unexpected detachment of the cover panel from the pivot body.

Although the roughness can be any kind of roughness which results in a better grip between the clamping profile and the edge part of the cover panel, such as for example an application of a coating with a relatively high friction coefficient, a ribbed surface and so on, the residential vehicle in a particular embodiment according to the invention is characterized in that the roughness comprises one or more teeth protruding into the space. The teeth form an especially effective roughness which is capable of and adapted to secure itself somewhat in the surface of the edge part of the cover panel using the clamping power of the clamping profile. In this way an unintentional detachment of the cover panel from the pivot body can practically fully ruled out.

In a further preferred embodiment the residential vehicle according to the present invention is characterized in that one of the clamping cheeks is longer than the other clamping cheek. A protruding free end part of the longer clamping cheek in relation to the other clamping cheek provides a useful extension part along which to guide the edge part of the cover panel into the space between the clamping cheeks. In particular a positioning of the second body part of the pivot body over an end of the edge part of the cover panel is thus considerably simplified.

A further preferred embodiment of the residential vehicle according to the present invention is characterized in that the clamping profile comprises a part bordering the space at an upper side with a surface facing the space to counter-receive an end of the edge part of the cover panel, the part being provided with at least one recess in the surface. In order to prevent a possible sliding of the edge part of the cover panel within the clamping profile, the edge part is fitted with the end at least almost fully up against the upper side of the part bordering the space and is glued to it. In order to be able to dispose of an adhesive suitable for gluing at least one recess such as a groove or a series of consecutive pits is arranged in the surface of the part to form a space in which an applied adhesive can assemble. Optionally further such adhesive spaces can be provided in the clamping cheeks on either side of the edge part of the cover panel. An advantage of a provision of adhesive spaces in the part bordering the upper side of the space is however that a thickness of the pivot body is thus not influenced.

In a further special embodiment the residential vehicle according to the present invention is characterized in that a surface of the pivot body on the visible side and a surface of the front wall on the visible side are flush. The total surface of the cover panel on the visible side is thus at least almost completely flat, which apart from providing an aesthetically appealing whole moreover provides an important advantage in terms of aerodynamic properties of the residential vehicle.

In a further special embodiment the residential vehicle according to the present invention is characterized in that the first body part of the pivot body comprises an assembly part inserted in a slit provided in the wall. The slit can be fitted in the wall of the residential vehicle beforehand and provides a simple fastening method wherein the pivot body is correctly positioned against the wall. The first body part of the pivot body thus also partly juts into the wall of the residential vehicle, with only a coupling part limited in size for coupling to the second body part of the pivot body protruding from the wall of the residential vehicle. Thus a thickness of a part of the pivot body protruding from the wall remains limited.

In an alternative example of the residential vehicle described in the preamble the front wall comprises an offset edge part and sticks into the clamping profile with the edge part. By engaging with the clamping profile on the front wall instead of the back wall, the cover panel can be realized in a particularly flat manner. A maximum thickness of a part of the cover panel extending from the outer side of the wall is in this case almost exclusively determined by a thickness of the pivot, the back wall being shaped such that it mainly extends into the opening.

In a further example of the residential vehicle described in the preamble the clamping profile engages clampingly with a clamping cheek on either side of the edge part of the front wall a surface of a clamping cheek on the visible side being level with a surface of the front wall on the visible side. Thus the total surface of the cover panel with pivot body is at least almost totally flat on the visible side.

In a further example of the residential vehicle described in the preamble the first body part comprises an at least almost flat fastening part which is secured against the wall with fastening means.

A further preferred embodiment of the residential vehicle according to the present invention is characterized in that a sealing body is provided on an edge of the wall defining the wall opening with a form-flexible elastic part partly within the wall opening and partly protruding from the wall, the sealing body permitting a deformation wherein the elastic part moves further into the wall opening under pressure from a cover panel in the closed position fastened against it. Since the elastic part of the sealing body, for example a rubber bead, is not located completely between the cover panel and the wall of the residential vehicle, but is partly situated in the wall opening and under pressure from the cover panel in the closed position can move further into the opening, an even flatter position of the cover panel against the wall of the residential vehicle is realized.

In a special embodiment of this the residential vehicle according to the present invention is characterized in that the sealing body comprises a blocking lip which in an unburdened position of the sealing body in the open position of the cover panel maintains a distance to a remaining part of the sealing body to be freely movable within the distance and due to a bridging of the distance allows a maximum deformation of the sealing body. The blocking lip constitutes a relatively simple yet adequate means of preventing a too large deformation of the sealing body under pressure from the cover panel in the closed position. Thus the sealing body provides a long-lasting reliable air- and liquid-tight sealing between the cover panel and the wall of the residential vehicle.

The invention will now be explained further based on an example and an embodiment and an accompanying drawing. The drawing shows in:
- figure 1A: a front view of a cover panel fastened against a wall of a residential vehicle in a first example;
- figure 1B: a side view of a cross section according to line A-A as reproduced in figure 1A of the cover panel fastened against the wall of the residential vehicle;
- figure 1C: a detailed view of an upper edge of the cover panel fastened against the wall of the residential vehicle as reproduced in figure 1B;
- figure 2A: a front view of a cover panel fastened against a wall of a residential vehicle in an example of an embodiment according to the present invention;
- figure 2B: a side view of a cross section according to line A-A as reproduced in figure 2A of the cover panel fastened against the wall of the residential vehicle according to the present invention; and
- figure 2C: a detailed view of an upper edge of the cover panel fastened against the wall of the residential vehicle according to the present invention as reproduced in figure 2B;

The figures are incidentally purely schematic and not drawn to scale. In particular some of the dimensions may be exaggerated to a greater or lesser extent in their rendering for the sake of clarity.

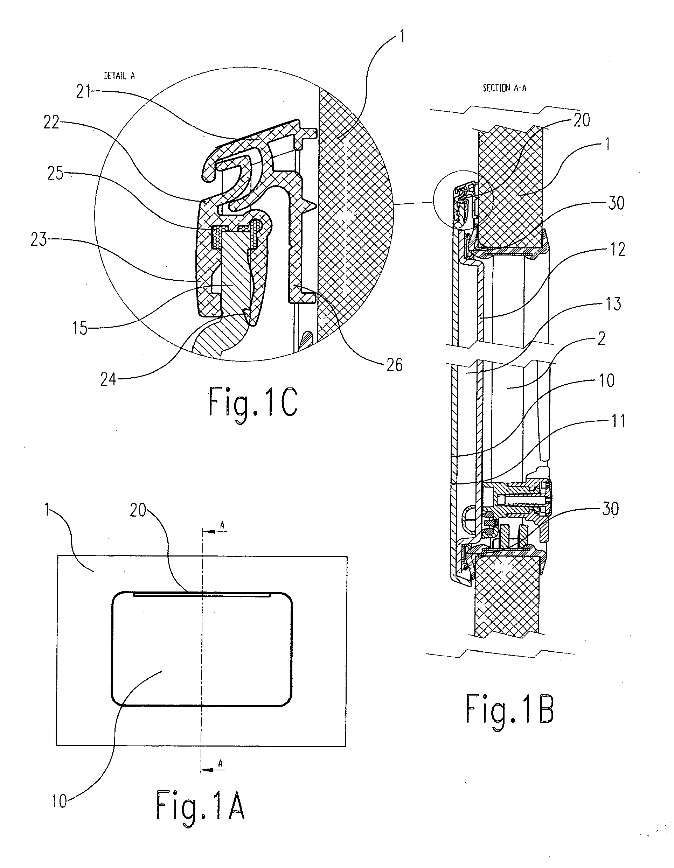

As shown in figures 1A, 1B and 1C in a first example of a residential vehicle the residential vehicle comprises a wall 1, for example an outer wall of a caravan or camper, within which at least an opening 2, for example a door opening or as in this example of an embodiment a window opening, is provided. The opening 2 is completely covered by a cover panel 10, in this example of an embodiment a window, which is fastened against an outer side of the wall 1 with a pivot body 20. The cover panel 10 comprises a double-walled window panel with an at least almost flat front wall 11 and a back wall 12 with an offset edge part. The front wall 11 and back wall 12 border a cavity space 13 situated between them, which provides the window panel 10 with an increased insulating value. The front wall and back wall are completely made of plastic for a sufficiently strong, reliable yet lightweight whole. The walls 11, 12 are largely transparent to provide an unobstructed view through the window panel.

The back wall 12 is glued against the front wall 11 with the offset edge part which results in a strong double-walled structure. In this case a thickness of the double-walled cover panel 10 is mainly determined by the back wall 12 with offset edge part. By placing the back wall 12 partly in the opening 2 in the wall 1 of the residential vehicle, the protruding part of the cover panel 10 remains limited vis-à-vis an outer side of the wall 1.

The flat front wall 11 thus lies flat against the outer side of the wall 1. On the one hand this makes the view of the residential vehicle aesthetically appealing, and on the other hand air currents have less effect on the cover panel so that the cover panel 10 is less susceptible to a unexpected flying open or breaking off during a movement or transportation of the residential vehicle.

A further relatively flat realization of the cover panel 10 against the wall 1 of the residential vehicle is achieved by using the pivot body 20 comprising a first body part 21 and second body part 22, mutually detachable, and the first body part comprising a fastening part 26 for fastening with the wall 1 of the residential vehicle and the second body part 22 comprising a clamping profile in which an edge part 15 of the front wall 11 is received clampingly.

The pivot body 20 offers a fast and reliable assembly of the cover panel 10 against the wall 1 of the residential vehicle. In this case the edge part 15 of the cover panel is carried out in a completely flat manner because protruding fastening parts such as a hook are not necessary at all for reliable fastening. The body parts 21, 22 of the pivot body 20 thus do not need to provide any space for such a protruding fastening part to the cover panel, so that it can be produced in a relatively flat manner to protrude as little as possible with respect to an outer side of the wall 1. The first body part 21 comprises mainly a pivot channel in which the second body part 22 is pivotingly received with an end , whilst the second body part 22 mainly comprises the clamping profile which is adapted in thickness to a thickness of the edge part 15.

On either side of the edge part 15 the clamping profile comprises two clamping cheeks 23 facing each other which engage clampingly with the edge part 15. To achieve an extremely reliable fastening of the edge part 15 in the clamping profile at least one of the clamping cheeks 23 at a free end is provided with a roughness facing the space carried out as a tooth 24 protruding into the space. The tooth 24 forms a barbed hook which under the clamping force of the clamping profile partly attaches itself into the material of the edge part 15 so that an unintentional detachment of the cover panel 10 from the pivot body 20 is prevented.

One of the clamping cheeks, in this example of an embodiment the clamping cheek on which the tooth 24 is provided, is somewhat longer than the other clamping cheek 23, i.e. extends a bit further along the edge part 15. The protruding end of the longer clamping cheek provides a useful attachment part along which to guide an end of the edge part 15 when fitting the pivot body 20 on the cover panel 10. In particular a positioning of the second body part 22 of the pivot body over an end of the edge part 15 is thus considerably simplified.

To make certain that the edge part 15 is arrange sufficiently far inside the clamping profile for a reliable clamping thereof, the edge part 15 is arranged with an end at least almost against a part of the clamping profile bordering the upper side of the space. The bordering part in this case has at least a recess 25 on a surface facing the space in which to receive an adhesive. An advantage of such an adhesive space 25 in the part bordering the upper side of the space is that this results in an especially reliable fastening of the cover panel 10 in the pivot body 20 by gluing, whilst no thickening of the pivot body is necessary for this purpose. Optionally further such adhesive spaces in the clamping cheeks on either side of the edge part of the cover panel may be provided, as displayed in figure 1C.

The edge part 15 of the front wall 11 lies somewhat offset from a central part of the front wall 11 so that a clamping part 23 of the clamping profile which is located on a visible side of the edge part 15 at least almost fully connects flatly to the central part of the front wall 11. An outer side of the pivot body on the visible side thus lies totally aligned with an outer side of the cover panel 10 on the visible side. Thus the cover body 10 together with the pivot body 20 forms an at least almost flat and uninterrupted surface on a visible side.

In order to realize a long-lasting reliable air- and liquid-tight sealing between the cover panel 10 and the wall 1 of the residential vehicle a sealing body 30 is provided in the wall opening at an edge of the wall 1 defining the wall opening. The sealing body 30 comprises a rubber body provided with a rubber bead which partly resides inside the wall opening and partly protrudes from the wall. Due to the fact that the rubber bead forms a form-flexible elastic part it allows an elastic deformation under pressure from the cover body 10 fastened against it. Since the rubber bead moves largely in the wall opening, the cover panel 10 can lie especially flush against the wall 1 of the residential vehicle.

To prevent a too large deformation of the sealing body 30 under pressure from the cover panel 10 in the closed position, possibly leading to air or even liquid leakages between the cover panel and the wall, a blocking lip is used determining a maximum permissible deformation of the sealing body. At the maximum permissible deformation in the closed position of the cover panel a further displacement of the blocking lip is prevented because it rests against a remaining part of the sealing body. In the open position of the cover panel the blocking lip maintains a certain distance to the remaining part of the sealing body to be freely movable over this distance.

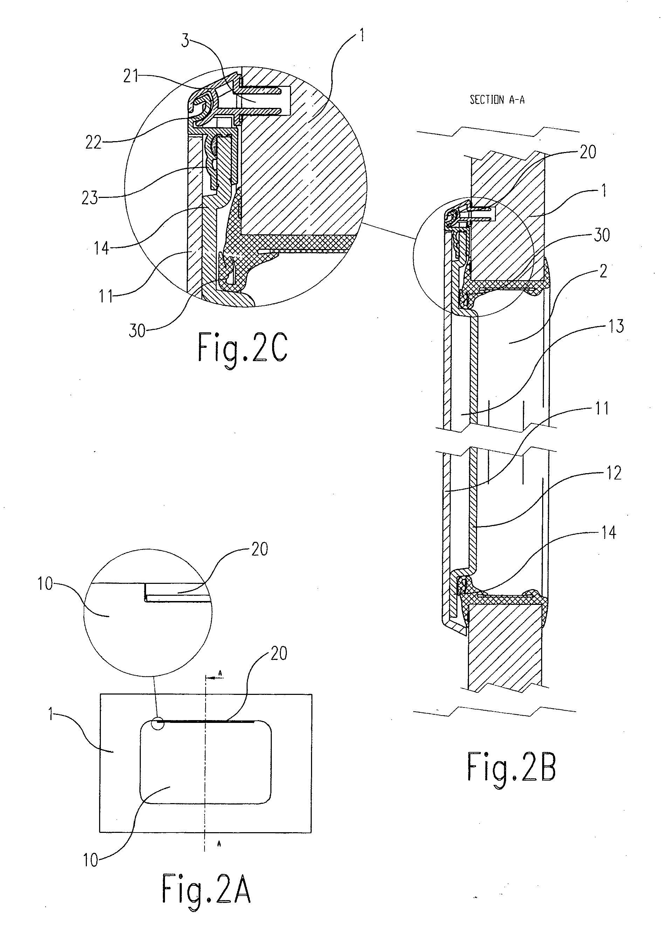

As shown in figures 2A, 2B and 2C in an embodiment of the residential vehicle according to the present invention the cover panel 10 comprises an at least almost identical double-walled window panel as the window panel shown in figures 1A, 1B and 1C. A relatively flat realization of the cover panel 10 against the wall 1 of the residential vehicle is however achieved in an alternative way in this embodiment example by using a pivot body 20 with a clamping profile 23 in which an offset edge part 14 of the back wall 12 is clampingly received. An edge part of the front wall 11 in this case extends beyond the clamping cheek 23 of the clamping profile to hide the clamping profile from view on the visible side for an aesthetically more appealingly designed cover panel provided with pivot body.

To ensure the pivot body 20 protrudes as little as possible on an outer side of the wall 1, the first body part 21 of the pivot body 20 is stuck in a groove 3 which is provided in the wall 1 of the residential vehicle. Only a pivot part of the first body part 21 to which the second body part 22 is pivotingly fastened protrudes from the outer side of the wall 1.

Although the invention was described above solely using one single embodiment it should be clear that the invention is certainly not limited to this. On the contrary, in the context of the invention many variations and embodiments are available to the average person skilled in the art.

## Claims

1. Residential vehicle, such as a caravan, camper or boat, comprising a wall (1) with at least a wall opening (2) and a cover panel (10) to seal the wall opening, the cover panel (10) comprising a double-walled panel with an at least almost flat front wall (11) on a visible side and a back wall (12) on a side facing the wall opening, the front wall and back wall bordering a cavity space (13), wherein the cover panel (10) is fastened to the wall (1) by means of a pivot body (20) with which the cover panel (10) is adjustable between a closed position sealing the wall opening (2) and an open position releasing the wall opening (2), wherein the pivot body (20) comprises an open space to receive an edge part of the cover panel, and wherein the pivot body (20) comprises a first body part (21) fastened to the wall (1) and a second body part (22) fastened to the first body part (21) in a pivoting manner and detachable from the first body part, **characterized in that** the second body part (22) comprises a clamping profile bordering the space on either side to receive an edge part of the back wall (12) clampingly in the space in the clamping profile and the front wall (11) extends beyond at least the clamping profile of the pivot body with an edge part.

2. Residential vehicle according to claim 1, **characterized in that** the clamping profile engages clampingly on either side of the edge part (14) of the cover panel with two clamping cheeks (23) facing each other which are provided with a roughness at least near a free end on a side facing the space.

3. Residential vehicle according to claim 2, **characterized in that** the roughness comprises one or more teeth (24) protruding into the space.

4. Residential vehicle according to claim 2 or 3, **characterized in that** one of the clamping cheeks (23) is longer than the other clamping cheek.

5. Residential vehicle according to any of the preceding claims, **characterized in that** the clamping profile comprises a part bordering the space at an upper side with a surface facing the space to counter-receive an end of the edge part of the cover panel, the part being provided with at least one recess (25) in the surface.

6. Residential vehicle according to any of the preceding claims, **characterized in that** a surface of the pivot body (20) on the visible side and a surface of the front wall (11) on the visible side are flush.

7. Residential vehicle according to any of the preceding claims, **characterized in that** the first body part (21) of the pivot body (20) comprises an assembly part sticking into a slit provided in the wall.

8. Residential vehicle according to any of the preceding claims, **characterized in that** on an edge of the wall defining the wall opening a sealing body (30) is provided with a form-flexible elastic part which is partly within the wall opening and partly protrudes from the wall, the sealing body (30) permitting a deformation wherein the elastic part moves further into the wall opening under pressure from a cover panel in closed position fastened against it.

9. Residential vehicle according to claim 8, **characterized in that** the sealing body (30) comprises a blocking lip which in an unburdened position of the sealing body in the open position of the cover panel maintains a distance to a remaining part of the sealing body to be freely movable within the distance and due to a bridging of the distance allows a maximum deformation of the sealing body.

## Patentansprüche

1. Wohnfahrzeug wie ein Caravan, ein Camper oder ein Boot, umfassend eine Wand (1) mit wenigstens einer Wandöffnung (2) und einer Abdeckplatte (10) zum Absperren der Wandöffnung, wobei die Abdeckplatte (10) eine Doppelwandplatte mit wenigstens einer fast ebenen Frontwand (11) auf einer Sichtseite und einer Rückwand (12) auf einer der Wandöffnung zugewandten Seite aufweist, wobei die Frontwand und die Rückwand einen Hohlraum (13) begrenzen, wobei die Abdeckplatte (10) an der Wand (1) mittels eines Schwenkkörpers (20) befestigt ist, mit dem die Abdeckplatte (10) justierbar ist zwischen einer geschlossenen, die Wandöffnung (2) absperrenden Position und einer die Wandöffnung (2) freigebenden Position, wobei der Schwenkkörper (20) einen offenen Raum zum Aufnehmen eines Kantenteiles der Abdeckplatte umfasst, und wobei der Schwenkkörper (20) ein erstes Körperteil (21) aufweist, das an der Wand (1) befestigt ist, und ein zweites Körperteil (22), das am ersten Körperteil (21) schwenkbar und vom ersten Körperteil lösbar befestigt ist, **dadurch gekennzeichnet, dass** das zweite Körperteil (22) ein Klemmprofil aufweist, das auf beiden Seiten an den Hohlraum angrenzt, um ein Kantenteil der Rückwand (12) eingespannt im Hohlraum im Klemmprofil aufzunehmen, und wobei sich die Frontwand (11) zumindest über das Klemmprofil des Schwenkkörpers mit einem Kantenteil hinaus erstreckt.

2. Wohnfahrzeug nach Anspruch 1, **dadurch gekennzeichnet, dass** das Klemmprofil beidseits des Kantenteiles (14) der Abdeckplatte einspannend erfasst, wobei die beiden Klemmbacken (23) einander zugewandt und wenigstens im Bereich eines freien Endes auf einer dem Hohlraum zugewandten Seite aufgeraut sind.

3. Wohnfahrzeug nach Anspruch 2, **dadurch gekennzeichnet, dass** die Rauigkeit aus ein oder mehreren Zähnen (24) gebildet ist, die in den Hohlraum hineinragen.

4. Wohnfahrzeug nach Anspruch 2 oder 3, **dadurch gekennzeichnet, dass** einer der Klemmbacken (23) länger als der andere Klemmbacken ist.

5. Wohnfahrzeug nach einem der vorausgegangen Ansprüche, **dadurch gekennzeichnet, dass** das Klemmprofil einen Teil aufweist, der an den Hohlraum an einer oberen Seite mit einer dem Hohlraum zugewandten Fläche angrenzt, um ein Ende des Kantenteiles der Abdeckplatte aufzunehmen, und wobei der Teil mit wenigstens einer Aussparung (25) in der Fläche versehen ist.

6. Wohnfahrzeug nach einem der vorausgegangenen Ansprüche, **dadurch gekennzeichnet, dass** die Fläche des Schwenkkörpers (20) auf der Sichtseite mit einer Fläche der Frontwand (11) auf der Sichtseite bündig ist.

7. Wohnfahrzeug nach einem der vorausgegangenen Ansprüche, **dadurch gekennzeichnet, dass** der erste Körperteil (21) des Schwenkkörpers (20) eine Einheit umfasst, die in einem Schlitz in der Wand steckt.

8. Wohnfahrzeug nach einem der vorausgegangenen Ansprüche, **dadurch gekennzeichnet, dass** an einer Ecke der die Wandöffnung bildenden Wand ein Dichtkörper (30) mit einem formelastischen Teil versehen ist, das sich teilweise in der Wandöffnung befindet und teilweise über die Wand hinausragt, wobei der Dichtkörper (30) eine Verformung dann erlaubt, wenn sich der elastische Teil in die Wandöffnung weiter hinein erstreckt unter dem Druck einer Wandplatte, die in geschlossener Position hieran befestigt ist.

9. Wohnfahrzeug nach Anspruch 8, **dadurch gekennzeichnet, dass** der Dichtkörper (30) eine Blockierlippe aufweist, die in unbelasteter Position des Dichtkörpers in der offenen Position der Abdeckplatte einen Abstand zu einem verbleibenden Teil des Dichtkörpers einhält, und innerhalb des Abstandes und zufolge einer Überbrückung des Abstandes eine maximale Verformung des Dichtkörpers erlaubt.

## Revendications

1. Véhicule d'habitation, tel qu'une caravane, un camping-car ou un bateau, comprenant une paroi (1) comportant au moins une ouverture (2) et un capot (10) pour fermer l'ouverture dans la paroi, le capot (10) comprenant un panneau à double paroi avec une paroi de façade quasiment plate au moins (11) sur une face visible et une paroi arrière (12) sur une face faisant face à l'ouverture dans la paroi, la paroi de façade et la paroi arrière étant situées le long d'un espace creux (13), le capot (10) étant fixé à la paroi (1) par un organe pivotant (20) au moyen duquel le capot (10) peut être réglé soit en position fermée qui ferme l'ouverture dans la paroi (2) soit en position ouverte qui libère l'ouverture dans la paroi (2), l'organe pivotant (20) comportant un espace libre pour recevoir une bordure du capot, une première partie (21) de l'organe pivotant (20) étant fixée à la paroi (1) et une seconde partie (22) étant fixée à la première (21) de façon à pivoter et à pouvoir être détachée de la première partie, **se caractérisant par le fait que** la seconde partie de l'organe (22) comprend un profilé de fixation longeant l'espace de chaque côté pour recevoir et retenir une bordure de la paroi arrière (12) et que la paroi de façade (11) dépasse au moins du profilé de fixation de l'organe pivotant avec une bordure.

2. Véhicule d'habitation selon la revendication 1, **se caractérisant par le fait que** le profilé de fixation s'engage et se fixe de chaque côté de la bordure (14) du capot avec deux joues de fixation (23) se faisant face qui présentent une aspérité au moins à proximité d'une extrémité libre sur un côté faisant face à l'espace.

3. Véhicule d'habitation selon la revendication 2, **se caractérisant par le fait que** l'aspérité comprend une ou deux dents (24) en saillie.

4. Véhicule d'habitation selon la revendication 2 ou 3, **se caractérisant par le fait que** l'une des joues de fixation (23) est plus longue que l'autre joue de fixation.

5. Véhicule d'habitation selon une ou plusieurs des revendications précédentes, **se caractérisant par le fait que** le profilé de fixation comprend une partie bordant l'espace en partie haute avec une surface faisant face à l'espace pour recevoir à l'opposé une extrémité de la bordure du capot, ladite partie étant dotée d'au moins une encoche (25) sur sa surface.

6. Véhicule d'habitation selon une ou plusieurs des revendications précédentes, **se caractérisant par le fait que** la surface de l'organe pivotant (20) sur le côté visible et une surface de la paroi de façade (11) sur le côté visible sont alignées.

7. Véhicule d'habitation selon une ou plusieurs des revendications précédentes, **se caractérisant par le fait que** la première partie (21) de l'organe pivotant (20) comprend une pièce d'assemblage qui entre dans une fente pratiquée dans la paroi.

8. Véhicule d'habitation selon une ou plusieurs des revendications précédentes, **se caractérisant par le fait que** sur un rebord de la paroi définissant l'ouverture dans la paroi un élément d'étanchéité (30) est équipé d'une pièce en plastique souple qui se trouve en partie à l'intérieur de l'ouverture de la paroi et en partie en saillie par rapport à la paroi, l'élément d'étanchéité (30) autorisant une déformation permettant à la pièce en plastique de s'avancer davantage dans l'ouverture de la paroi sous la pression d'un capot en position fermée appuyé contre elle.

9. Véhicule d'habitation selon la revendication 8, **se caractérisant par le fait que** l'élément d'étanchéité (30) comprend une lèvre de blocage qui, dans une position non contrainte de l'élément d'étanchéité dans la position ouverte du capot, maintient une certain espace par rapport à une partie restante de l'élément d'étanchéité afin de pouvoir être librement déplacé à l'intérieur de l'espace concerné et, du fait d'une compensation de l'espace, autorise une déformation maximum de l'élément d'étanchéité.
